# EUROPEAN PATENT SPECIFICATION

(11) **EP 3 180 985 B1**
(45) Date of publication and mention of the grant of the patent: **13.02.2019**
(21) Application number: 16202458.2
(22) Date of filing: 06.12.2016
(51) Int. Cl.: A21C 5/00, A21C 5/08

(54) **METHOD FOR FEEDING AND DISPENSING A FOODSTUFF MIXTURE TO A LINE FOR FORMING PRODUCTS FROM THE MIXTURE**
VERFAHREN ZUM ZUFÜHREN UND AUSGEBEN EINER LEBENSMITTELMISCHUNG AN EINE LEITUNG ZUR FORMUNG VON PRODUKTEN AUS DER MISCHUNG
PROCÉDÉ D'ALIMENTATION ET DE DISTRIBUTION D'UN MÉLANGE ALIMENTAIRE À UNE LIGNE DE FORMATION DE PRODUITS À PARTIR DU MÉLANGE

(30) Priority: 16.12.2015 IT UB20159666
(43) Date of publication of application: 21.06.2017
(73) Proprietor: SANCASSIANO S.p.A., I-12060 Roddi d'Alba (Cuneo) (IT)
(72) Inventor: DROCCO, Davide, I-12060 Roddi d'Alba (Cuneo) (IT)
(74) Representative: Frontoni, Stefano

(56) References cited:
- EP-A1- 2 103 218
- WO-A1-2010/064908
- DE-A1- 2 907 568
- JP-A- 2000 287 606

## Description

### Field of the invention

The present invention regards a method for feeding and dispensing a mixture to a line for forming products from the mixture and a hopper for implementing said method.

### Relevant prior art

The present invention relates in particular to the bakery field. In this field, in the vast majority of applications, the mixture used is a leavened mixture, which is characterized in that it has a relatively low specific weight on account of the carbon dioxide contained therein, which is generated by the leavening process.

The properties of the mixture deriving from leavening thereof constitute an important requirement for the quality of the final product, which hence must be preserved in the various steps subsequent to leavening up to baking of the products formed from the mixture.

In this connection it should be noted that, currently, once the mixture has been left to leaven, usually inside the same tank in which the process of mixing of the various ingredients for preparation of the mixture has been carried out, it is fed to the subsequent forming line via conveyor belts. The forming lines are then provided, upstream, with hoppers, which carry out a function of accumulation of the mixture and regulate the flow of the mixture along the line. Usually, the mixture is supplied to the hoppers in individual batches, which are obtained, along the line for conveying the mixture, via cutting devices, and are unloaded into the hoppers in succession, at time intervals determined in such a way that a substantially constant level of material is maintained in these hoppers.

The present applicant has been able to verify that the processes described above, for feeding the mixture to the forming line, present the drawback of altering the chemico-physical properties of the mixture, in particular jeopardizing considerably the leavened nature thereof obtained at the end of the leavening process. In fact, any action exerted on the dough tending to stretching it or in any case to subjecting it to a shear stress has the effect of causing collapse thereof so that the dough decreases in volume. Feeding via a conveyor belt, envisaged in the processes indicated above, exerts an action of this type, in so far as the leavened mixture presents a lack of consistency that causes it to stretch out on the belt, as a result of the inertia generated by the movement of the conveyor belt and of the conditions of friction that are set up between the mixture and the containment walls that delimit laterally the conveying path. The same action of collapse and stretching-out is caused by cutting of the dough carried out upstream and/or downstream of the conveyor belt to divide it into the individual batches, this operation having an effect that is all the more negative in regard to the mixture the more it is carried out repeatedly, at very short intervals apart, to divide the mixture into small amounts.

Documents JP2000287606 A, DE2907 568 A1, WO 2010/064908 A1 and EP2103218 A1 disclose methods and hoppers for dispensing dough mixtures.

### Object and summary of the invention

In the above context, the object of the present invention is to provide a new method for feeding and dispensing a mixture to a forming line, which will affect the quality of the mixture in a very limited way or in any case in a way more limited as compared to the currently used processes described above.

The object indicated is obtained via a method presenting the characteristics of Claim 1 and a hopper according to claim 6. The present invention moreover regards a hopper according to Claim 7.

The characteristics indicated in the ensuing claims form an integral part of the technical teaching provided herein.

The method described herein regards the step of feed of a mixture that has gone through the leavening process, from the tank in which it is contained, which is usually the same as that in which the leavening process is carried out, to the forming line designed to work the mixture to produce the final products.

The method described herein envisages feeding the mixture to the forming line according to a sequence of batches like the processes already known, but is characterized in that the batches in question are much larger than those obtained in a conventional process; in particular, each of them has a volume of not less than 25% of the total volume of mixture that is contained within the individual tank, at the end of the previous leavening step.

As will be seen in detail in what follows, the method described herein envisages the use of a hopper into which all the mixture contained in the tank is unloaded, and which is operated so as to divide said amount of mixture into a maximum number of batches less than or equal to four. In preferred embodiments, the amount of mixture is greater than or equal to 300 kg, and the individual batches are not less than 75 kg.

In various preferred embodiments, the hopper in question receives the mixture directly from the tank in which this had previously leavened, and is moved so as to deposit the mixture received directly onto the forming line.

In general, the method described herein is configured for exerting a delicate and far from aggressive action on the mixture in such a way that this will preserve the structure and consistency obtained from the leavening process.

### Detailed description of some embodiments

Further characteristics and advantages of the present invention will emerge clearly from the ensuing description with reference to the annexed drawings, which are provided purely by way of non-limiting example, and in which:
- Figure 1 is a schematic illustration of an embodiment of the method described herein;
- Figures 2A-2G illustrate an embodiment of the hopper used in the method described herein, in various respective steps of its operation; and
- Figures 3, 4, and 5 illustrate further embodiments of the hopper described herein.

In the ensuing description, various specific details are illustrated aimed at providing an in-depth understanding of the embodiments. The embodiments may be obtained without one or more of the specific details, or with other methods, components, or materials, etc. In other cases, known structures, materials, or operations are not shown or described in detail so that various aspects of the embodiment will not be obscured.

The references used herein are only provided for convenience and hence do not define the sphere of protection or the scope of the embodiments.

As anticipated above, the method described herein has the purpose of feeding and dispensing a foodstuff mixture to a line for forming products therefrom. The method described herein has been devised in particular for being used in lines for treatment of doughs for bakery products, in particular leavened doughs.

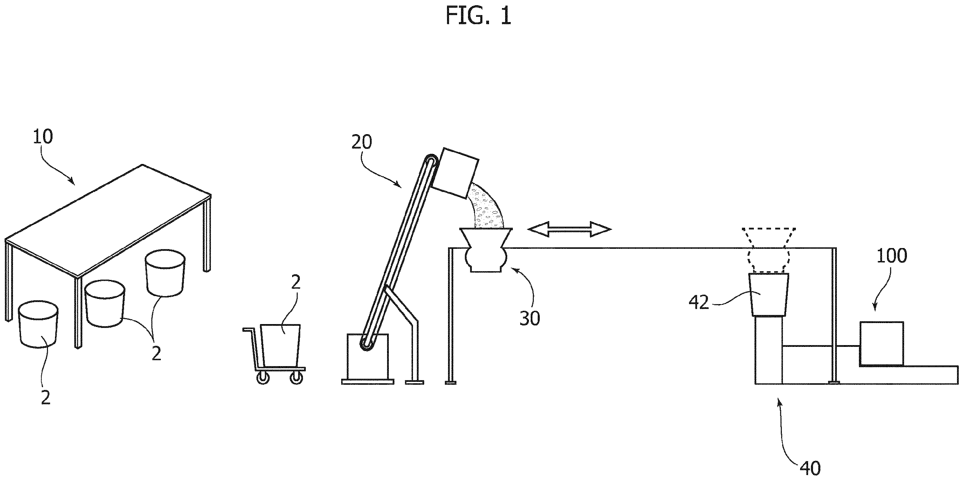

With reference to Figure 1, designated by the reference 10 is a station for leavening the mixture present in which are a plurality of tanks 2 containing a mixture in which a leavening process is in progress. In the proximity of the leavening station an overturning device 20 is present that is to receive the tanks 2 individually, after the process of leavening of the mixture is completed, and to turn them over in order to unload the mixture into a hopper 30 positioned adjacent to the device 20.

The hopper 30 is mobile, for example via an overhead-travelling-crane system, between the device 20 and a station 40 for loading of the mixture onto a forming line 100. Present at the above station is a hopper 42, which is to receive the mixture from the hopper 30 and to feed it along the forming line.

The hopper 30 has the function of unloading the mixture received by the device 20 onto the hopper 42 according to a sequence of batches. In particular, it operates so that the amount of mixture received by the tanks 2 will then be fed to the hopper 42 in a limited number of batches, in particular equal to or less than four. In this connection, it should be noted that the hopper 30 has a size substantially corresponding to that of the tanks 2, which are preferably of a conventional size able to receive an amount of mixture comprised between 300 and 3000 kg. The hopper 30 operates so as to produce batches of mixture of not less than 75 kg.

In the light of what has been said above, the method described herein hence envisages the steps of:
- setting the hopper 30 in a position corresponding to the overturning device 20;
- loading the mixture contained in the tank 2 directly into the hopper 30 via the device 20;

- moving the hopper 30 from the device 20 to the station 40;
- via the hopper 30, dispensing the mixture into the hopper 42 according to a succession of batches, in a maximum number of four; and
- bringing the hopper 30 back into a position corresponding to the device 20 for loading the mixture of a new tank 2.

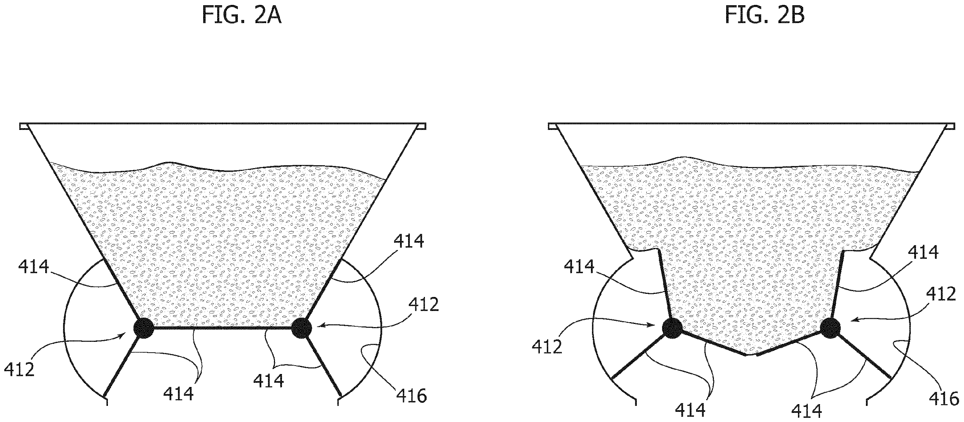

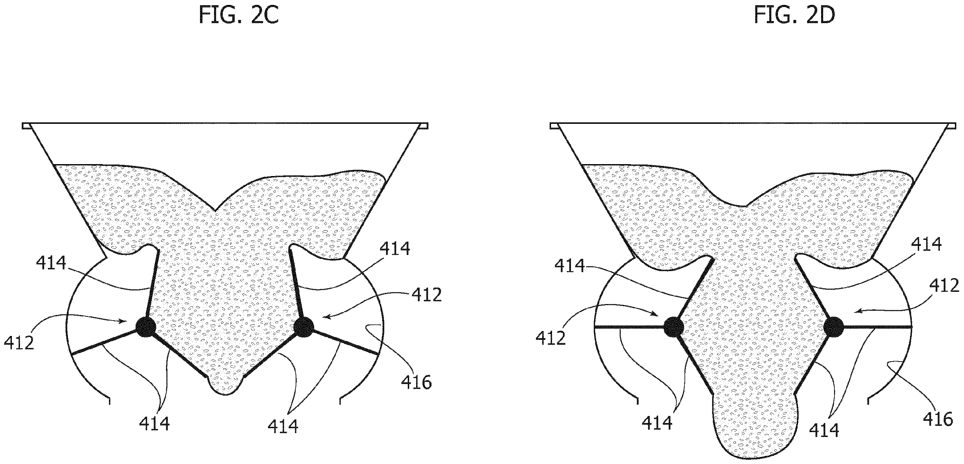

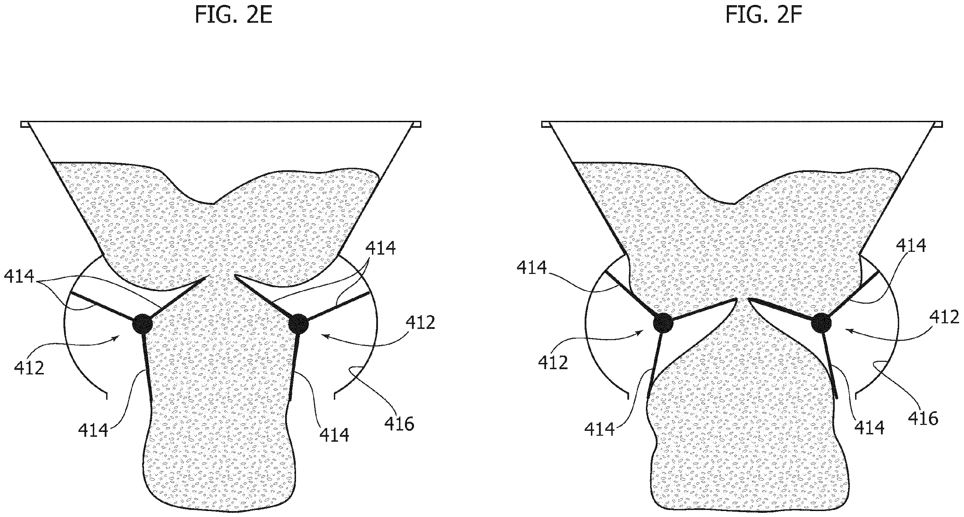

Represented in Figures 2A-2G is an embodiment of the hopper used in the method described herein. With reference to Figure 2A, it comprises a tank 310 provided on the bottom with a dispensing device 410 designed to regulate the flow of mixture at outlet.

In various embodiments, as in the one illustrated, the above dispensing device is constituted by a pair of rotors 412 provided with respective blades 414 designed to interact with one another in such a way that from the tank a predetermined amount of mixture will be taken at each rotation of the rotors through a predetermined angular range.

The above rotors are sized in such a way that the amount of mixture taken at each rotation is not less than 25% of the useful volume of the tank, i.e., of the total volume of mixture that can be contained therein. In various embodiments, as in the one illustrated, the rotors in question each have a plurality of blades oriented radially and arranged at the same angular distance apart from one another. In the embodiment illustrated, the blades in question are three in number and are arranged at approximately 120° with respect to one another.

The two rotors 412 are contained in a chamber 416 having a substantially ellipsoidal cross-sectional profile that adheres closely to the two rotors at their opposite sides.

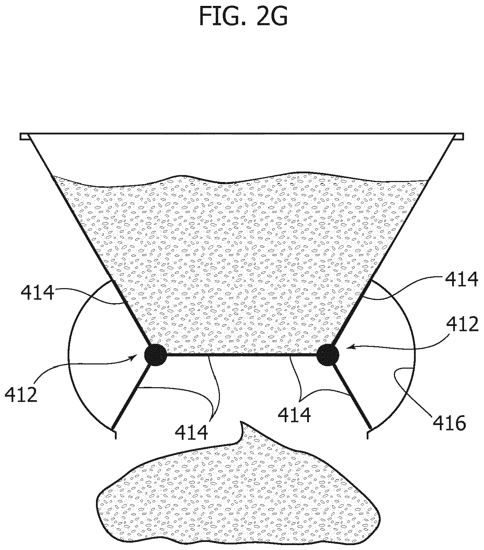

The rotation indicated above, which takes place for a predetermined angular interval, starts from a condition in which two of the blades of each rotor form, together with the other corresponding two blades of the other rotor, a closed bottom of the tank (see Figure 2A), and terminates when two new pairs of blades of the rotors go into the above condition (see Figure 2G). The succession of steps of Figures 2B-2F shows how the blades in question co-operate for taking from the tank the aforesaid predetermined amount.

As may be seen from the above figures, the action exerted on the mixture principally consists in accompanying dropping thereof by gravity, and usually in the final step of rotation a cutting action is exerted, which is in any case circumscribed to a particularly limited area of the mixture.

The fact of producing batches of mixture of relatively large dimensions, as indicated above, means that the individual batches will maintain as a whole the same structure and consistency obtained at the end of the leavening process, and that possible alterations of their structure will be circumscribed so as not to jeopardize the overall quality of the mixture.

Moreover, the use of one and the same hopper 30 for conveying the mixture unloaded from the tanks 2 to the forming line, presents the advantage on the one hand of limiting the number of handling operations to which the mixture is subjected - unlike known processes, in which the mixture may instead be subjected to a number of transfers from one conveying means to another - and, at the same time, to maintain the mixture in a gathered condition so as to safeguard its own structure and consistency.

To return once more to Figures 2A-2G, it should again be noted that the amount of mixture separated by the dispensing device illustrated in these figures, for each movement of rotation of the two rotors, is a function not only of the dimensions of the two rotors, but also of their angular velocity. In this connection, the hopper described herein comprises a control unit configured for actuating the two rotors in a movement of rotation that has a predetermined profile of the speed of rotation.

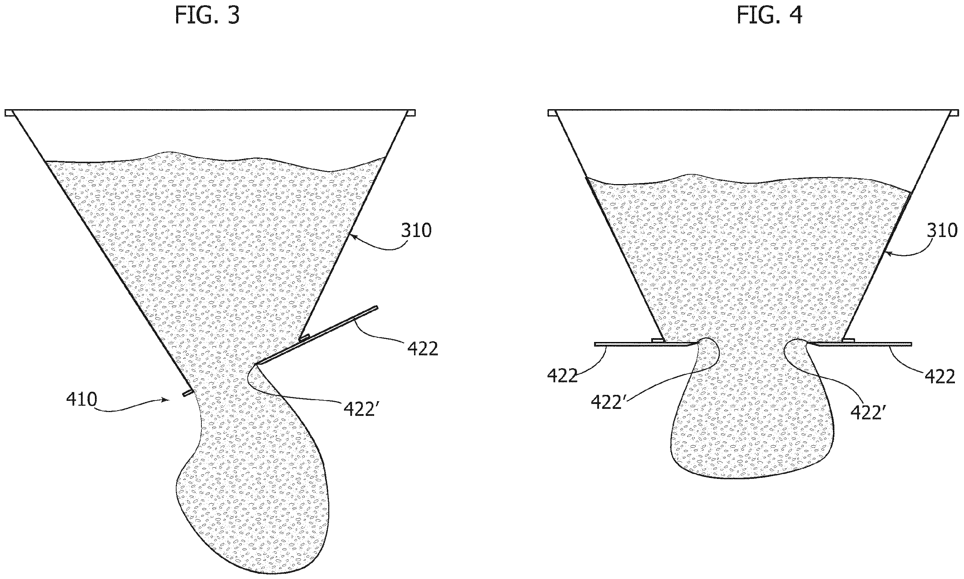

Figures 3, 4, and 5 show further embodiments of the hopper described herein. In these embodiments, the dispensing device 410 comprises one or two shutter elements 422 designed to regulate the flow of mixture at outlet from the hopper by varying the position assumed along its or their own sliding plane. The amount of mixture dispensed by this type of device is a function of the outflow section determined by the shutter element or elements and of the time in which the element or elements remains/remain in the opening position. In various preferred embodiments, the distal edge of the above element or elements has a cutting profile 422' to facilitate separation of the amount to be dispensed from the rest of the mixture.

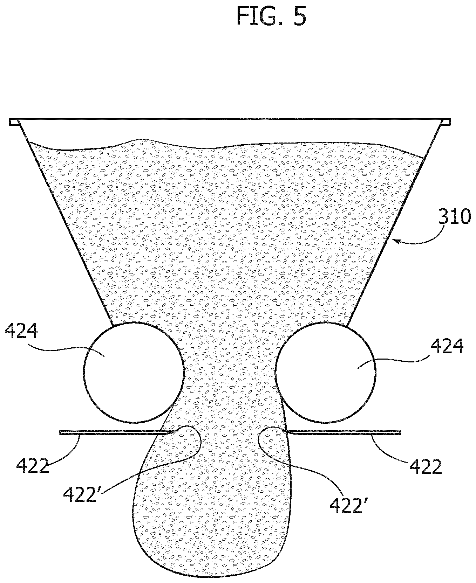

In the embodiment illustrated in Figure 3, in which there is a single shutter element, this is slidably mounted along a plane inclined with respect to the vertical axis of the tank, and controls an opening on the bottom of the tank that is shifted laterally with respect to the axis of symmetry of the tank itself. In the embodiments illustrated in Figures 4 and 5, in which the shutter elements are instead two, these are mounted at the opposite edges of a central opening obtained on the bottom of the tank and are mobile in the same horizontal plane. The hopper of Figure 5 is moreover characterized in that above and in the proximity of the two shutter elements, two opposed rollers 424 are provided, which face the inside of the tank and have the task of facilitating, as a result of their rotation, exit of the mixture.

## Claims

1. A method for feeding and dispensing a mixture, in particular a leavened mixture, to a forming line, comprising the step of feeding said mixture to said line according to a sequence of batches, wherein the method uses a hopper (30) designed to produce the individual batches that are fed to said forming line,
said hopper comprising:
- a tank (310) that is to receive said given amount of mixture and has a given volume;
- a dispensing device (410) mounted at the bottom of said tank and designed to regulate the flow of mixture at outlet from said tank; and
- means for controlling said dispensing device;
wherein said dispensing device is constituted by a pair of rotors (412) provided with respective blades designed to interact with one another in such a way as to take from said tank an amount of mixture, corresponding to said individual batches, for each rotation of the rotors by a predetermined angular interval, and wherein said rotors each have a plurality of blades oriented radially and arranged at the same angular distances apart from one another,
wherein said rotors are sized in such a way that the amount of mixture taken at each rotation is not less than 25% of the total volume of mixture that can be contained in said tank (310),
or wherein said dispensing device comprises one or two shutter elements (422) designed to regulate the flow of mixture at outlet from the hopper by varying the position assumed along its or their own sliding plane and wherein said control means are configured to regulate the position assumed by said one or two shutter elements (422) along its or their own sliding plane and the time in which said element or elements remains/remain in the opening position, in such a way that said mixture comes out of said tank according to a succession of individual batches of mixture, each of which has a volume of not less than 25% of said given volume of said tank,
wherein said method comprises the step of loading in succession into said hopper a given amount of mixture and actuating said hopper so as to produce from said given amount of mixture a maximum number of batches less than or equal to four.

2. The method according to Claim 1, which loads into said hopper the entire amount of mixture produced within a tank of a kneading machine in a single cycle of said machine.

3. The method according to Claim 1 or Claim 2, which loads into said hopper (30) said given amount of mixture directly from the tank of a kneading machine.

4. The method according to any one of the preceding claims, wherein said given amount of mixture is greater than or equal to 300 kg.

5. The method according to any one of the preceding claims, comprising the steps of:
- loading the entire contents of a tank (2) containing leavened mixture into said hopper (30) using a tank-overturning device (20);
- moving said hopper (30) from said overturning device (20) to said forming line (100); and
- via said hopper (30), feeding said sequence of batches to said forming line.

6. A hopper (30) for implementing the method according to any one of the preceding claims, comprising:
- a tank (310) that is to receive said given amount of mixture and has a given volume;
- a dispensing device (410) mounted at the bottom of said tank and designed to regulate the flow of mixture at outlet from said tank; and
- means for controlling said dispensing device; wherein said dispensing device is constituted by a pair of rotors (412) provided with respective blades designed to interact with one another in such a way as to take from said tank an amount of mixture, corresponding to said individual batches, for each rotation of the rotors by a predetermined angular interval, and wherein said rotors each have a plurality of blades oriented radially and arranged at the same angular distances apart from one another,
wherein said rotors are sized in such a way that the amount of mixture taken at each rotation is not less than 25% of the total volume of mixture that can be contained in said tank (310),
or wherein said dispensing device comprises one or two shutter elements (422) designed to regulate the flow of mixture at outlet from the hopper by varying the position assumed along its or their own sliding plane and wherein said control means are configured to regulate the position assumed by said one or two shutter elements (422) along its or their own sliding plane and the time in which said element or elements remains/remain in the opening position, in such a way that said mixture comes out of said tank according to a succession of individual batches of mixture, each of which has a volume of not less than 25% of said given volume of said tank.

7. The hopper according to Claim 6, wherein said rotors are contained in a chamber (414) obtained at the bottom of said tank, which has a substantially ellipsoidal cross-sectional profile that adheres closely to the two rotors at their opposite sides.

## Patentansprüche

1. Verfahren zum Zuführen und Ausgeben einer Mischung, insbesondere einer Sauerteigmischung, an eine Formungsanlage, umfassend den Schritt des Zuführens der Mischung in die Anlage gemäß einer Abfolge von Chargen,
wobei das Verfahren einen Fülltrichter (30) verwendet, der dafür ausgelegt ist, die einzelnen Chargen zu produzieren, die der Formungsanlage zugeführt werden,
wobei der Fülltrichter Folgendes umfasst:
- einen Behälter (310), der dafür vorgesehen ist, die bestimmte Mischungsmenge aufzunehmen, und ein bestimmtes Volumen aufweist,
- eine Ausgabeeinrichtung (410), die am Boden des Behälters angebracht und dafür ausgelegt ist, das Ausströmen der Mischung aus dem Behälter zu regulieren, und
- Mittel zum Steuern der Ausgabeeinrichtung,
wobei die Ausgabeeinrichtung durch ein Paar Rotoren (412) gebildet wird, die mit jeweiligen Blättern versehen sind, welche dafür ausgelegt sind, miteinander derart zusammenzuwirken, dass sie für jede Drehung der Rotoren um ein vorab bestimmtes Winkelintervall aus dem Behälter eine den einzelnen Chargen entsprechende Mischungsmenge entnehmen, und wobei die Rotoren jeweils eine Vielzahl radial ausgerichteter und um die gleichen Winkelabstände zueinander beabstandeter Blätter aufweisen, wobei die Rotoren derart bemessen sind, dass die bei jeder Drehung entnommene Mischungsmenge nicht weniger als 25 % des Gesamtmischungsvolumens beträgt, das in dem Behälter (310) gehalten werden kann,
oder wobei die Ausgabeeinrichtung ein oder zwei Verschlusselemente (422) umfasst, die dafür ausgelegt sind, den Fluss der Mischung am Auslass des Fülltrichters durch Variieren der entlang dessen oder deren Gleitebene eingenommenen Position zu regulieren, und wobei die Steuermittel konfiguriert sind, die durch das eine oder die zwei Verschlusselemente (422) entlang dessen oder deren Gleitebene eingenommene Position sowie die Zeit, in der das oder die Elemente in der Öffnungsposition verbleibt/verbleiben, derart zu regulieren, dass die Mischung gemäß einer Abfolge einzelner Mischungschargen aus dem Behälter austritt, die jeweils ein Volumen von nicht weniger als 25 % des bestimmten Volumens des Behälters aufweisen,
wobei das Verfahren den Schritt des aufeinanderfolgenden Ladens einer bestimmten Mischungsmenge in den Fülltrichter und des Betätigens des Fülltrichters so umfasst, dass dieser aus der bestimmten Mischungsmenge eine Höchstanzahl an Chargen kleiner als oder gleich Vier produziert.

2. Verfahren nach Anspruch 1, welches die gesamte innerhalb eines Behälters einer Knetmaschine in einem einzelnen Zyklus der Maschine produzierte Mischungsmenge in den Fülltrichter lädt.

3. Verfahren nach Anspruch 1 oder Anspruch 2,
welches die bestimmte Mischungsmenge unmittelbar aus dem Behälter einer Knetmaschine in den Fülltrichter (30) lädt.

4. Verfahren nach einem der vorhergehenden Ansprüche, wobei die bestimmte Mischungsmenge größer als oder gleich 300 kg ist.

5. Verfahren nach einem der vorhergehenden Ansprüche, umfassend die Schritte:
- Laden des gesamten Inhalts eines eine Sauerteigmischung enthaltenden Behälters (2) in den Fülltrichter (30) mittels einer Behälterkippeinrichtung (20),
- Bewegen des Fülltrichters (30) von der Kippeinrichtung (20) zur Formungsanlage (100) und
- Zuführen der Abfolge von Chargen in die Formungsanlage über den Fülltrichter (30).

6. Fülltrichter (30) zum Umsetzen des Verfahrens nach einem der vorhergehenden Ansprüche, umfassend:
- einen Behälter (310), der dafür vorgesehen ist, die bestimmte Mischungsmenge aufzunehmen, und ein bestimmtes Volumen aufweist,
- eine Ausgabeeinrichtung (410), die am Boden des Behälters angebracht und dafür ausgelegt ist, den Fluss der Mischung am Auslass des Fülltrichters zu regulieren, und
- Mittel zum Steuern der Ausgabeeinrichtung,
wobei die Ausgabeeinrichtung durch ein Paar Rotoren (412) gebildet wird, die mit jeweiligen Blättern versehen sind, welche dafür ausgelegt sind, miteinander derart zusammenzuwirken, dass sie für jede Drehung der Rotoren um ein vorab bestimmtes Winkelintervall aus dem Behälter eine den einzelnen Chargen entsprechende Mischungsmenge entnehmen, und wobei die Rotoren jeweils eine Vielzahl radial ausgerichteter und um die gleichen Winkelabstände zueinander beabstandeter Blätter aufweisen, wobei die Rotoren derart bemessen sind, dass die bei jeder Drehung entnommene Mischungsmenge nicht weniger als 25 % des Gesamtmischungsvolumens beträgt, das in dem Behälter (310) gehalten werden kann,
oder wobei die Ausgabeeinrichtung ein oder zwei Verschlusselemente (422) umfasst, die dafür ausgelegt sind, das Ausströmen der Mischung aus dem Fülltrichter durch Variieren der entlang dessen oder deren Gleitebene eingenommenen Position zu regulieren, und wobei die Steuermittel konfiguriert sind, die durch das eine oder die zwei Verschlusselemente (422) entlang dessen oder deren Gleitebene eingenommene Position sowie die Zeit, in der das oder die Elemente in der Öffnungsposition verbleibt/verbleiben, derart zu regulieren, dass die Mischung gemäß einer Abfolge einzelner Mischungschargen aus dem Behälter austritt, die jeweils ein Volumen von nicht weniger als 25 % des bestimmten Volumens des Behälters aufweisen.

7. Fülltrichter nach Anspruch 6, wobei die Rotoren in einer am Boden des Behälters erhaltenen Kammer (414) enthalten sind, die ein im Wesentlichen elliptisches Querschnittsprofil aufweist, das sich auf deren entgegengesetzten Seiten dicht an die beiden Rotoren fügt.

## Revendications

1. Procédé d'introduction et de distribution d'un mélange, en particulier d'un mélange levé, à une ligne de formation, comprenant l'étape d'introduction dudit mélange dans ladite ligne selon une séquence de lots,
dans lequel le procédé utilise une trémie (30) conçue pour produire les lots individuels qui sont introduits dans ladite ligne de formation,
ladite trémie comprenant :
- un réservoir (310) pour recevoir ladite quantité donnée de mélange et ayant un volume donné ;
- un dispositif de distribution (410) monté au fond dudit réservoir et conçu pour réguler le flux de mélange à la sortie dudit réservoir ; et
- des moyens pour commander ledit dispositif de distribution ;
dans lequel ledit dispositif de distribution est constitué par une paire de rotors (412) munis d'aubes respectives conçues pour interagir entre elles de manière à prélever dudit réservoir une quantité de mélange, correspondant auxdits lots individuels, pour chaque rotation des rotors d'un intervalle angulaire prédéterminé, et dans lequel lesdits rotors ont chacun une pluralité d'aubes orientées radialement et agencées aux mêmes distances angulaires les unes des autres,
dans lequel lesdits rotors sont dimensionnés de manière à ce que la quantité de mélange prélevée à chaque rotation ne soit pas inférieure à 25% du volume total de mélange qui peut être contenu dans ledit réservoir (310),
ou dans lequel ledit dispositif de distribution comprend un ou deux élément(s) d'obturation (422) conçu(s) pour réguler le flux de mélange à la sortie de la trémie par variation de la position adoptée le long de son ou de leur propre plan de coulissement et dans lequel lesdits moyens de commande sont configurés pour réguler la position adoptée par ledit ou lesdits deux élément(s) d'obturation (422) le long de son ou de leur propre plan de coulissement et le temps pendant lequel ledit élément ou lesdits éléments reste/restent dans la position d'ouverture, de manière à ce que ledit mélange sorte dudit réservoir selon une succession de lots individuels de mélange, dont chacun a un volume qui n'est pas inférieur à 25% dudit volume donné dudit réservoir,
dans lequel ledit procédé comprend l'étape consistant à charger en succession dans ladite trémie une quantité donnée de mélange et à actionner ladite trémie de manière à produire à partir de ladite quantité donnée de mélange, un nombre maximal de lots inférieur ou égal à quatre.

2. Procédé selon la revendication 1, qui charge, dans ladite trémie, la quantité totale de mélange produit dans un réservoir d'une machine de malaxage en un seul cycle de ladite machine.

3. Procédé selon la revendication 1 ou 2, qui charge, dans ladite trémie (30), ladite quantité donnée de mélange directement à partir du réservoir d'une machine de malaxage.

4. Procédé selon l'une quelconque des revendications précédentes, dans lequel ladite quantité donnée de mélange est supérieure ou égale à 300 kg.

5. Procédé selon l'une quelconque des revendications précédentes, comprenant les étapes qui consistent :
- à charger tout le contenu d'un réservoir (2) contenant un mélange levé dans ladite trémie (30) en utilisant un dispositif de renversement de réservoir (20) ;
- à déplacer ladite trémie (30) dudit dispositif de renversement (20) à ladite ligne de formation (100) ; et
- à introduire, par l'intermédiaire de ladite trémie (30), ladite séquence de lots dans ladite ligne de formation.

6. Trémie (30) pour mettre en oeuvre le procédé selon l'une quelconque des revendications précédentes, comprenant :
- un réservoir (310) pour recevoir ladite quantité donnée de mélange et ayant un volume donné ;
- un dispositif de distribution (410) monté au fond dudit réservoir et conçu pour réguler le flux de mélange à la sortie dudit réservoir ; et
- des moyens pour commander ledit dispositif de distribution ;
dans laquelle ledit dispositif de distribution est constitué par une paire de rotors (412) munis d'aubes respectives conçues pour interagir entre elles de manière à prélever dudit réservoir une quantité de mélange, correspondant auxdits lots individuels, pour chaque rotation des rotors d'un intervalle angulaire prédéterminé, et dans laquelle lesdits rotors ont chacun une pluralité d'aubes orientées radialement et agencées aux mêmes distances angulaires les unes des autres,
dans laquelle lesdits rotors sont dimensionnés de manière à ce que la quantité de mélange prélevée à chaque rotation ne soit pas inférieure à 25% du volume total de mélange qui peut être contenu dans ledit réservoir (310),
ou dans laquelle ledit dispositif de distribution comprend un ou deux élément(s) d'obturation (422) conçu(s) pour réguler le flux de mélange à la sortie de la trémie par variation de la position adoptée le long de son ou de leur propre plan de coulissement et dans laquelle lesdits moyens de commande sont configurés pour réguler la position adoptée par ledit ou lesdits deux élément(s) d'obturation (422) le long de son ou de leur propre plan de coulissement et le temps pendant lequel ledit élément ou lesdits éléments reste/restent dans la position d'ouverture, de manière à ce que ledit mélange sorte dudit réservoir selon une succession de lots individuels de mélange, dont chacun a un volume qui n'est pas inférieur à 25% dudit volume donné dudit réservoir.

7. Trémie selon la revendication 6, dans laquelle lesdits rotors sont contenus dans une chambre (414) obtenue au fond dudit réservoir, qui a un profil en coupe transversale essentiellement ellipsoïdal qui adhère étroitement aux deux rotors sur leurs côtés opposés.
